# EUROPÄISCHE PATENTANMELDUNG

(11) **EP 2 524 731 A1**
(43) Veröffentlichungstag der Anmeldung: **21.11.2012**
(21) Anmeldenummer: 11004195.1
(22) Anmeldetag: 20.05.2011
(51) Int. Cl.: B04B 5/02, C25B 1/04

(54) **Drehmaschine zum Trennen von Stoffen verschiedener Aggregatzustände**

(71) Anmelder: Treutner, Wolfgang, 20253 Hamburg (DE)
(72) Erfinder: Treutner, Wolfgang, 20253 Hamburg (DE)

(57) **Zusammenfassung**

Eine Drehmaschine wird mit einer oder mit mehreren Behältnissen eingerichtet. Die Behältnisse sind zugänglich und können sich absenken beim Stillstand der Drehmaschine. Verschiedene bisher nicht genutzte Anwendungsmöglichkeiten ergeben sich bei großen Anlagen, auch dadurch, dass über Magnetschwebe- und Vortriebsverfahren keine mechanische Reibung entsteht und somit kein Verschleiß. Dadurch wird ein Dauerbetrieb möglich.

Bei der Wasserstoffgewinnung mit Hilfe der Drehmaschine hilft die Fliehkraft, bei gleichzeitig erzeugten Vakuum und den Schwingungen aus dem Schalldruckerzeuger zu erhöhter Wasser- und Sauerstoffproduktion als bei herkömmlicher Produktionsweise.

Bei der Metallgewinnung sind Schmelzverfahren unter sehr hohem Druck durch die Fliehkraft bisher noch nicht durchgeführt worden. Jede Verdichtung der Molekutarstruktur hat aber bisher immer zu Verbesserungen geführt, zum Beispiel beim Schmieden. Laserbearbeitung des superdichten Materials lassen problemlose Formgebung zu.

Bei der Quarzschmelze können mit diesem Verfahren einige Arbeitsschritte entfallen. Das würde die Produktion drastisch preiswerter machen und damit die Kosten der Fotovoltaik herabsetzen. Das gleiche gilt für andere anorganische Materialien.

Ebenso für viele organische Anwendungen. Frische und auch neue Getränke können kreiert werden, Auch Öle und Säfte und quasi alle Flüssigkeiten würden durch die Produktionsart verbessert, oder ermöglicht werden, denkt man zum Beispiel an kaltgepresstes Öl. Die Faserstoffe der gänzlich von Flüssigkeiten befreiten Früchte etc. können als Diät "Knabberspass" völlig kalorienfrei wohlschmeckend gegen Fettleibigkeit eingesetzt werden, oder textil verwoben werden usw.

In der Chemie und auch Petrochemie führt die Aufarbeitung mittels der Drehmaschine und Zubehör zu neuen und preiswerteren Produktionsverfahren. Ausschließlich hiermit kann man in einem Behälter "Über- (Fliehkraft) und Unterdruck erzeugen.

## Beschreibung

### Gattung des Anmeldegegenstandes:

Drehmaschine zum Bearbeiten von Flüssigkeiten während und nach der Drehung der Drehmaschine, mit diversen Hilfsaggregaten.

### Aufgabe der Gattung:

Während der Drehbewegung mit der Drehmaschine werden durch Bearbeitung verschiedene Änderungen des physikalischen und chemischen Zustands des zu bearbeitenden Materials erreicht. Festes kann verflüssigt und oder vergast werden. In Flüssigem können Flüssigkeiten und Gase getrennt werden, und Schwebstoffe abgesetzt werden. Chemisch, petrochemische Stoffe können schneller verändert werden als mit herkömmlichen Verfahren. Verflüssigte Stoffe, die normalerweise nur als Feststoffe vorhanden sind, wie zum Beispiel Metalle (Eisen Aluminium usw.), und Mineralien (Quarz usw.), können dadurch in ihrer Struktur verändert werden. Wasser kann in Wasserstoff und Sauerstoff zerlegt werden. Und Wasser kann zu Trinkwasser aufbereitet werden. Aus organischem Material kann die Flüssigkeit separiert werden, um die Flüssigkeit und oder das Strukturgewebe der beispielsweise Obst oder Gemüse zu erhalten.

### Stand der Technik:

Zentrifugen sind oft nur in der Medizin bzw. in der Chemie oder Nukleartechnik im Einsatz. Beispielsweise sind keine Elektrolysegeräte oder Bessemerbirnen auf Zentrifugen vorhanden. Antriebe von Magetschwebeverfahren sind nicht in diesem Zusammenhang vorhanden.

### Aufgabe-.

Um beim Elektrolyseverfahren eine höhere Ausbeute zu erzielen, erfolgt dieses Verfahren während der Drehbewegung mit der Drehmaschine. Mit Hilfe diverser Zusatzaggregate (Schalldruckerzeuger, Vibratoren, Vakuumersteller usw.) kann der Wirkungsgrat noch gesteigert werden.

Wasser soll gereinigt werden indem sich Stoffe absetzen, beziehungsweise nach oben gedrückt werden. Diese können dann separiert gewonnen werden.

Flüssiger Stahl soll durch die besonderen Druckverhältnisse molekular "enger gepackt" werden. Das ist bekannt durch Schmieden des Stahls (japanische Messer) und anderer Verfahren.

Das gleiche gilt für alle flüssigen oder verflüssigten Materialien, deren Struktur sich dadurch verbessert oder das Fertigungsprogramm sich beschleunigt beziehungsweise deren Wirkungsgrat verbessert.

### Lösung:

Die Lösung der Aufgabe besteht in den Anordnungen der Behältnisse der Drehmaschine und der angebrachten Zusatzaggregaten. Außerdem wenn es erforderlich wird, auch mit Hilfe des Magnetvortriebsverfahren. Die Außenumdrehungsgeschwindigkeit kann dreifach so hoch sein wie über dem Magnetring und an "Schallmauergeschwindigkeiten" heranreichen

### Weitere Ausgestaltung der Erfindung:

Auf der Drehmaschine werden jeweils zwei Kammern gegenüber mit gleichen Zentrifugen und Zusatzaggregaten, wie Schafldruckgebem, Vakuumpumpen und Kammern versehen, um auch bei höheren Umdrehungen im Gleichgewicht zu bleiben. Die Justierung kann bei einer leichten Unwucht durch Wasserzugabe ausgeglichen werden. Das Wasser zur Zerlegung in der Elektrolyse kann ständig zugeführt werden, um nicht die Maschine anhalten zu müssen. Ebenso die Abgabe von Wasser- und Sauerstoff mittels Rohre in der Drehachse, die durch versetzte Öffnungen in Behälter abgeführt werden. Von dort aus werden diese weitergeleitet und komprimiert beziehungsweise verflüssigt.

Bei Petrochemischen Verarbeitungen von ÖL verändert sich das Separieren des Öls unter veränderter Schwerkraft ebenso positiv. Auf der einen Seite erhöhte Schwerkraft, und auf der anderen Seite Unterdruck, beschleunigen den Prozess mit dem erhitzten ÖL

Beim Altöl sorgt die Fliehkraft für das Ansetzen und Ausflocken der Verunreinigungen im Öl und kann wie vor beschrieben separiert werden. Das gleiche gilt für viele chemische Stoffe.

Die Anwendungen in der Lebensmittelindustrie verlaufen nach dem gleichen Verfahren und lassen viele Verfahren zu. Angefangen von Trinkwasseraufbereitung bis zur Speiseölgewinnung. Das gewollte sanfte Trennen von Obst-oder Gemüsesäften von der Faserstruktur ist hier besonders wichtig, wenn die Faserstruktur möglichst unbeschadet erhalten sein soll.

Bei Metallen wie Stahl, Aluminium, Kupfer etc. sowie Legierungen oder zu trennende Mischformen diverser Metalle verbessert die Drehmaschine mit ihren Verarbeitungsaggregaten die Qualität der Stoffe. Außerdem sind in der Regel Zeit- und Energieeinsparung gegeben. Mann stelle sich rotierende Bessemerbirnen vor und kann die Qualität und die Dichte des Metalls crahnen.

Da es bei der Herstellung von Solarzellen für Photovoltaikanlagen um besonders homogene Quarzblöcke geht, und diese in aufwendigen Schmelzprozessen gewonnen werden, bietet sich ebenso dieses Verfahren an.

### Beschreibung der Ausführung.

Ausführungsbeispiele der Erfindung sind in der Zeichnung 1),2),3),4),5) dargestellt und werden im Folgenden näher beschrieben.

### Es zeigen:

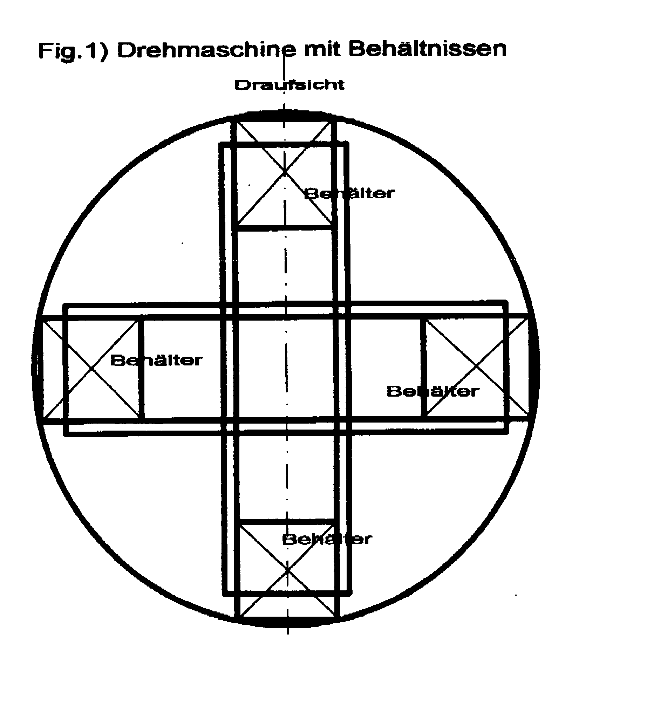

Fig. 1) Drehmaschine mit Behältnissen

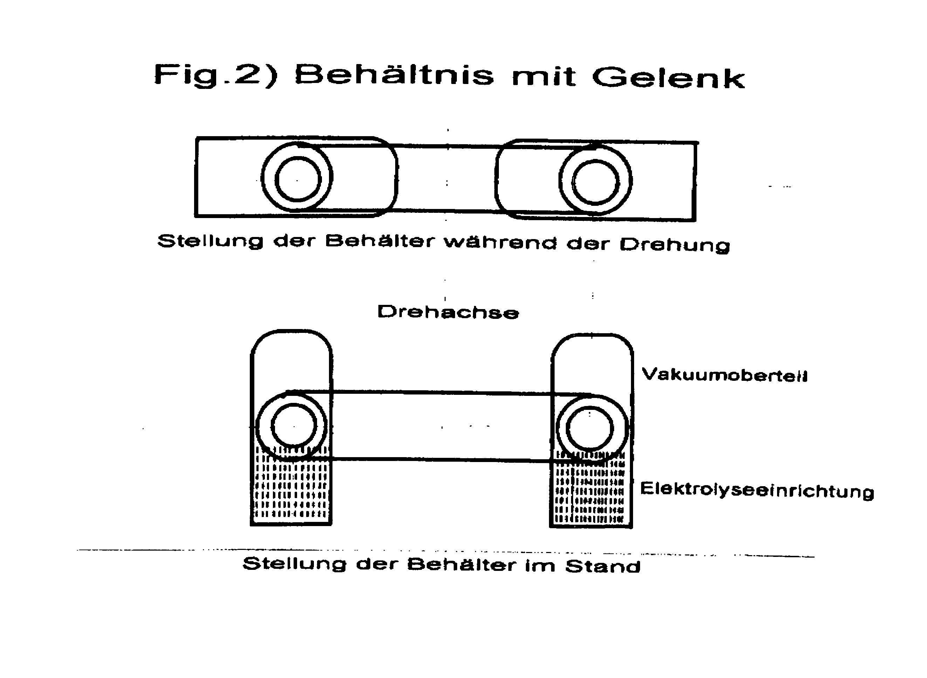

Fig. 2) Behältnis mit Gelenk

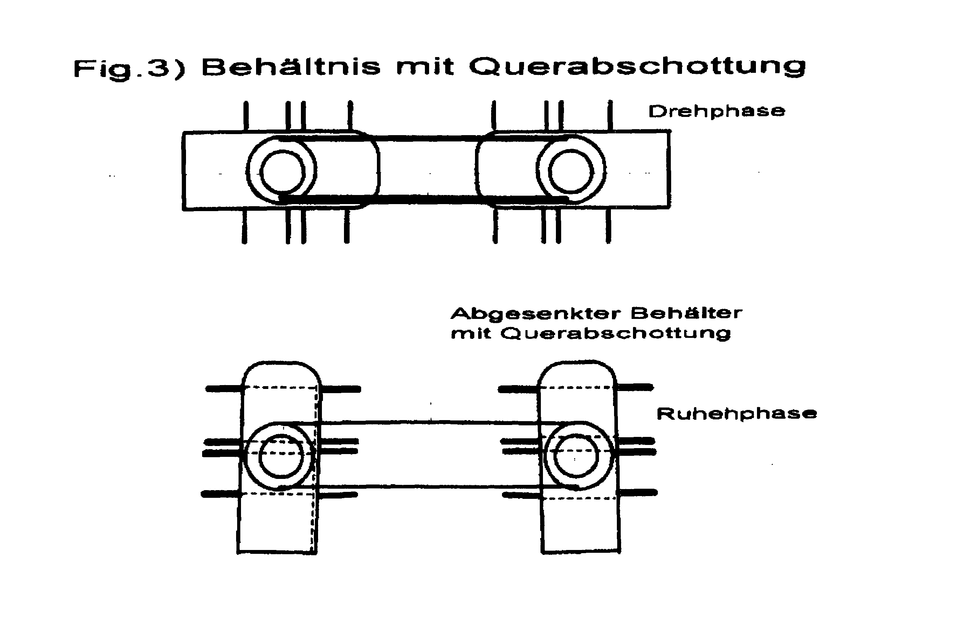

Fig. 3) Behältnis mit Querabschottung

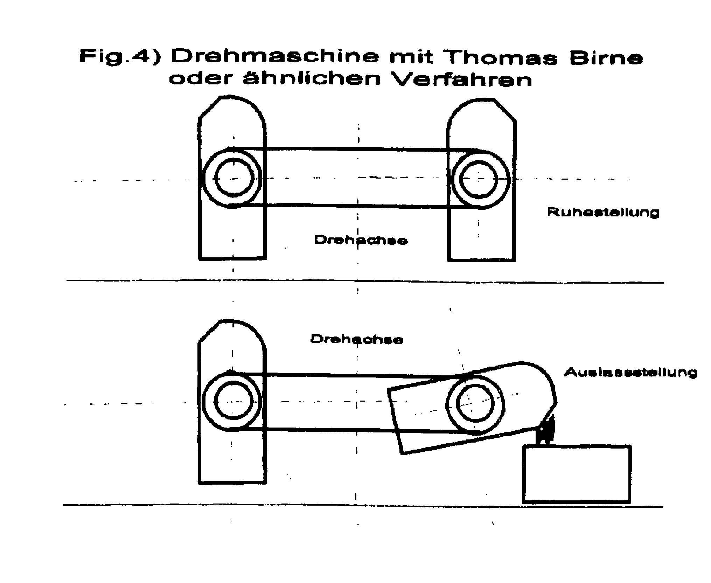

Fig. 4) Behältnis mit Thomas etc. Birnen

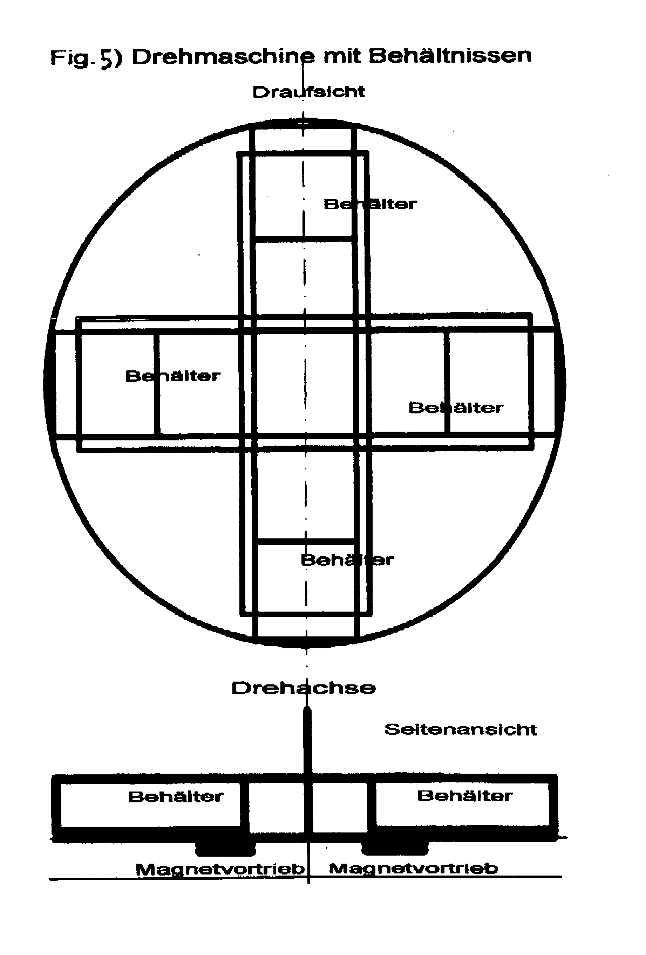

Fig. 5) Drehmaschine mit Magnetschwebeeinrichtung

## Patentansprüche

1. *Oberbegriff:* Drehmaschine zum Trennen von Stoffen verschiedener Aggregatzustände.
*Kennzeichnender Teil:*
**Dadurch gekennzeichnet, dass** in einer Drehmaschine Behältnisse mit Zusatzinrichtungen ausgestattet sind, die das flüssige, oder gasförmige oder feste Material trennen, separieren, erwärmen oder kühlen können und mehrere Aggregatzustände in einem Behälter herstellen können. Wie zum Beispiel großer Druck durch eine hohe Fliehkraft bei gleichzeitigem Unterdruck in derselben Kammer. Außerdem ist eine gleichzeitige mechanische Bearbeitung vorgesehen durch ein oder mehrere Zusatzgeräte. Wie zum Beispiel Schwingungsgeber, oder Magnetfeldausrichter, intern oder extern gesteuert. Anstelle der Mehrfachbehältnisse kann auch die gesamte Anlage oder Teile davon als Behältnis gelten.
*Oberbegriff des Unteranspruchs 1 Patentanspruch 2*
Eine oder mehrere Elektrolysegeräte werden jeweils in ein Behältnis gegeben und mit Wasser umgeben. Diese sind in der Drehmaschine zugänglich, zum Beispiel durch Abkippen im Stand. Um bei hoher Fliehkraft keine Unwucht zu erzeugen, werden gegenüberliegende Behältnisse gleichartig bestückt. Die Oberteile der Behältnisse können luftdicht abgeschlossen sein, und können mit Aggregaten Unterdruck erzeugen, in Kammern getrennt für Wasserstoff und Sauerstoff Eine ständige, oder sporadische Entnahme erfolgt mit Hilfe von Absaugpumpen. Eine Schalldruckeinrichtung beschleunigt den Gesamtprozess und lässt eine höhere Wasser- und Sauerstoffgewinnung in vergleichbarer Zeit zu.
*Kennzeichnender Teil des Unteranspruchs 1*
Eine Drehmaschine mit Elektrolysegeräten zum elektrischen Aufspalten von Wasser in Wasserstoff und Sauerstoff mit Beschallung und gegebenenfalls Unterdruck.
*Oberbegriff des Unteranspruchs 2 Patentanspruch 3*
Magnetfeldeinrichtungen zur schnellen berührungslosen Kreisbewegungen, ähnlich der Magnetschwebebahn. Allerdings mit winkelverkürzten Innenspulen. Zusätzliche Induktionseinrichtungen lassen elektronische Steuerungen und Stromversorgung zu.
*Kennzeichnender Teil des Unteranspruchs 2*
Magnetvortriebs und Bremseinrichtung sind hauptsächlich für große Anlagen, die je nach Entfernung von Drehpunkt für große Geschwindigkeiten am Außenrand sorgen. Zusammen mit einem berührungslosen induktionsverfahren für Steuerung und Ladung hat die Anlage kaum bzw. keinen mechanischen Verschleiß.
*Oberbegriff des Unteranspruchs 3 Patentanspruch 4*
Trenneinrichtungen Schieber oder Iriseinrichtungen usw. um die Flüssigkeiten, die sich untereinander durch die Drehbewegung getrennt haben, auch räumlich zu trennen.
*Kennzeichnender Teil des Unteranspruchs 3*
Schieber oder andrere Trenneiniichtungen wie eine Iris usw. trennen die Flüssigkeiten um diese separat aus den Behältern zu entleeren, ohne dass es beim Ausgießen zu Verwirbelungen kommen kann, was besonders auch bei dünnen Trennschichten von Bedeutung ist.
*Oberbegriff des Unteranspruchs 4 Patentanspruch 5*
Wärme oder Kühleinrichtungen um chemische Prozesse in Gang zu bringen oder zu beschleunigen. Eine Heizung bringt das Feststoffgut in den flüssigen Zustand oder setzt aus Flüssigkeiten Gase frei.
*Kennzeichnender Teil des Unteranspruchs 4*
Heizung oder Kühleinrichtungen unterstützen oder ermöglichen diverse chemisch und oder physikalische Prozesse.
